# EUROPEAN PATENT APPLICATION

(11) **EP 1 093 102 A1**
(43) Date of publication of application: **18.04.2001**
(21) Application number: 00117901.9
(22) Date of filing: 19.08.2000
(51) Int. Cl.: G08C 17/02, H04M 1/725

(54) **Device controller working at frequencies of portable telephones**

(30) Priority: 12.10.1999 JP 28992199
(71) Applicant: Murakami Corporation, Shizuoka-shi, Shizuoka, 422-8569 (JP)
(72) Inventor: Hidenori, Sato, Fujieda-shi, Shizuoka, 426-0061 (JP)
(74) Representative: Dallmeyer, Georg, Dipl.-Ing.

(57) **Abstract**

A device controller (12) includes a wave signal receiving section (16) for receiving a wave signal of a predetermined frequency used for communication between a portable telephone terminal (10) and a base station (30), an identification section (18) for analyzing an identification code contained in the received wave signal and detecting whether the identification code coincides with a previously registered identification code or not, an analyzing section (20) for analyzing operation data of the portable telephone terminal contained in the received wave signal, and a control section (22) for controlling a device (29) to be controlled in accordance with the analyzed data. The analyzing section (20) or the control section (22) performs a corresponding operation on condition that coincidence of the identification code has been detected by the identification section (18).

## Description

This invention relates to a device controller used for remote-controlling various devices by utilizing a portable telephone terminal.

Known in the art is a remote-controlling technique for controlling electric devices such as a television and a video tape recorder and vehicle devices such as a door lock device and an engine starter by using a remote controller. As remote-controlling devices utilizing a portable telephone terminal, there are devices disclosed in Japanese Patent Application Laid-open Publication No. Hei 10-276480 and Japanese Patent Application Laid-open Publication No. Hei 11-55748.

The remote-controlling device disclosed in Japanese Patent Application Laid-open Publication No. Hei 10-276480 includes a portable telephone terminal which has a talk mode and a remote-control mode which can be switched one mode from the other and a peripheral device which controls driving of devices mounted on a vehicle such as a navigation unit and a radio unit by a remote control signal which is transmitted during the remote control mode of the portable telephone terminal.

The remote-controlling device disclosed in Japanese Patent Application Laid-open Publication No. Hei 11-55748 includes a portable telephone terminal having a switch which selects one of a telephone function section and a remote control function section and a control device which controls a vehicle mounted unit (an air conditioner, an engine control unit etc.) in response to a remote control signal transmitted from the portable telephone terminal.

In the prior art device controller using a portable telephone terminal, an electromagnetic wave used exclusively for remote-controlling is transmitted from a portable telephone terminal separately from a telephone talk wave and, therefore, a special type portable telephone terminal is required.

It is, therefore, an object of the invention to provide a device controller which can remote-control various devices by directly using an ordinary type portable telephone terminal.

For achieving the above described object of the invention, there is provided a device controller comprising a wave signal receiving section for receiving a wave signal of a predetermined frequency used for communication between a portable telephone terminal and a base station, an identification section for analyzing an identification code contained in the received wave signal and detecting whether the identification code coincides with a previously registered identification code or not, an analyzing section for analyzing operation data of the portable telephone terminal contained in the received wave signal, and a control section for controlling a device to be controlled in accordance with the analyzed data, said analyzing section or said control section performing a corresponding operation on condition that coincidence of the identification code has been detected by said identification section.

According to the invention, the wave used for communication between the portable telephone terminal and the base station is received and the device to be controlled is controlled on the basis of operation data of the portable telephone terminal contained in the received wave and, accordingly, devices can be remotely controlled by directly using an ordinary type portable telephone terminal. Further, by confirming the identification code by the identification section, operation of the device controller in response to a signal transmitted from an unregistered portable telephone terminal can be prevented.

In one aspect of the invention, the device to be controlled is provided in a vehicle. According to this aspect of the invention, a device provided in a vehicle can be operated by an ordinary type portable telephone terminal from a location which is distant from the vehicle.

In another aspect of the invention, the device provided in a vehicle is at least one of a key-less entry device, an engine starter and an air conditioner. The key-less entry device, engine starter or air conditioner provided in the vehicle can be operated by an ordinary type portable telephone terminal from a location which is distant from the vehicle.

In another aspect of the invention, the device to be controlled is provided in a house. According to this aspect of the invention, a device provided in a house can be operated by an ordinary type portable telephone terminal from a location which is distant from the device.

In another aspect of the invention, the device provided in a house is at least one of a remote controlled garage key opener, a remote controlled front door lock, a television, a video tape recorder and an air conditioner. The remote controlled garage key opener, remote controlled front door lock, television, video tape recorder or air conditioner provided in the house can be operated by an ordinary type portable telephone terminal without touching control keys of the devices.

According to still another aspect of the invention, the operation data starts from the "*" mark or the "#" mark. According to this aspect of the invention, since a number starting from "0" (i.e., telephone number) used for starting a telephone call is not used, an erroneous start of a telephone call can be prevented.

A preferred embodiment of the invention will be described below with reference to the accompanying drawings.

In the accompanying drawings,
Fig. 1 is a schematic system diagram showing an embodiment of the device controller made according to the invention; and
Fig. 2 is a diagram showing specific examples of operation data used in the device controller of Fig. 1.

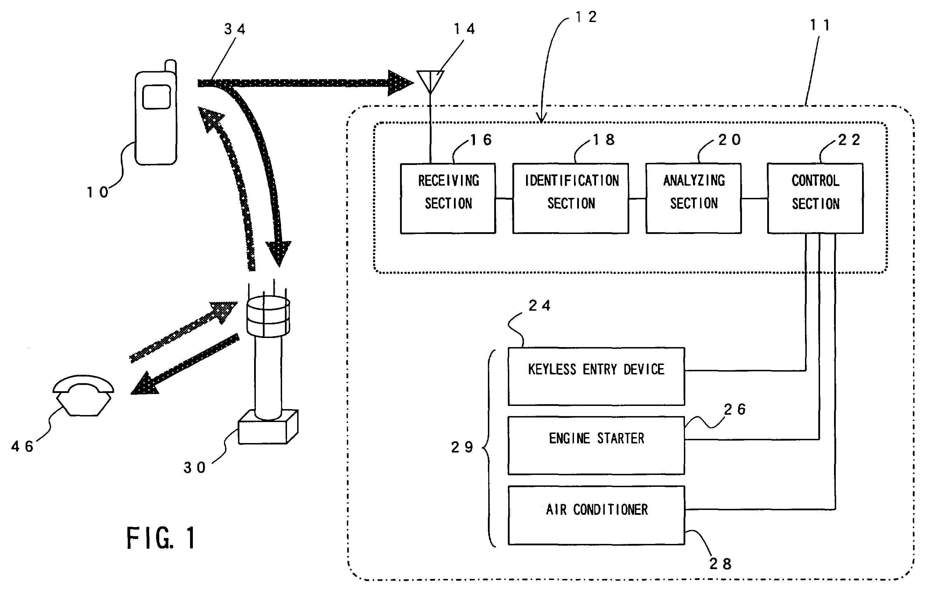

Referring to Fig. 1, a device controller 12 mounted on a vehicle 11 includes a receiving antenna 14, a receiving section 16, an identification section 18, an analyzing section 20 and a control section 22. The control section 22 is connected to a key-less entry device 24, an engine starter 26 and an air conditioner 28 which are provided in a vehicle.

A portable telephone terminal 10 is made of an ordinary type portable telephone terminal. When an operator performs off-hook operation, a signal demanding identifying of the identification code and permission of telephone talk is transmitted to a base station 30. The base station 30 which has received this signal identifies the identification code and thereupon designates a channel which connects the portable telephone terminal 10 with the base station 30. Upon designation of the channel, a dial tone announcing that talk can be made from the portable telephone terminal 10 is transmitted. When the operator has confirmed the dial tone and input a telephone number for starting an ordinary telephone call by operating buttons on the portable telephone terminal 10, a transmission signal 34 including the operation data is transmitted from the portable telephone terminal 10.

The base station 30 receives the transmission signal 34 and calls a corresponding telephone terminal 46. When the telephone terminal 46 is hooked off, telephone talk can be made. A transmission signal from an ordinary type portable telephone terminal is transmitted on a time-shared basis for each predetermined unit section. In each unit section, identification code, voice data and operation data are contained.

The transmission signal 34 from the portable telephone terminal 10 is received also by the device controller 12. Referring to Fig. 1, description will be made about a case where the devices 29 are operated from the portable telephone terminal 10.

The device controller 12 receives the transmission signal 34 from the receiving antenna 14 and demodulates the signal by the receiving section 16. The demodulated signal is sent to the identification section 18. The identification section 18 detects whether the identification code peculiar to the portable telephone terminal contained in the transmission signal 34 coincides with the previously registered code or not. Upon detection of coincidence of the identification code, the analyzing section 20 analyzes operation data associated with the operation buttons contained in the transmission signal 34. The control section 22 converts the signal to a control signal for controlling a predetermined one of the devices 29 in accordance with the operation data. The control signal is transmitted to a corresponding one of the devices 29 to cause the device to execute the designated operation.

For operation data for controlling the devices 29, data which is not used for starting a telephone call (telephone number) is used and, therefore, an erroneous start of a telephone call during controlling of the devices 29 can be prevented. Conversely, for operation data for a telephone call, data which is not used for controlling the devices 29 is used and, therefore, an erroneous control of the devices 29 at starting of a telephone call can be prevented.

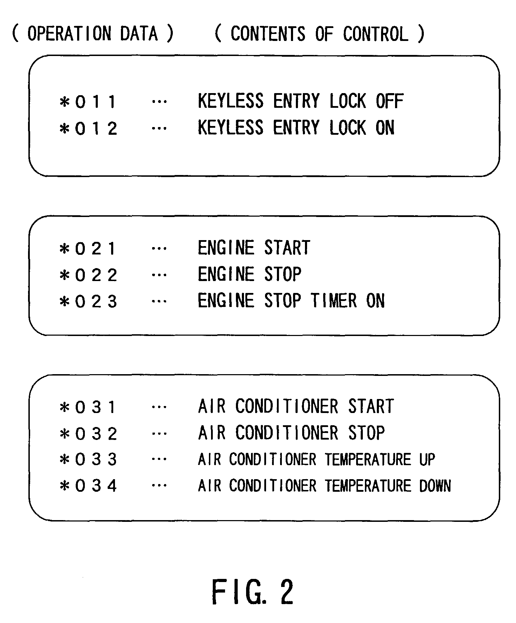

Fig. 2 shows specific examples of operation data used for controlling the devices 29. In the operation data of Fig. 2, "*011", for example, means that operation buttons of "*", "0", "1", "1" are sequentially depressed. The operation data for controlling the devices 29 is so set that it starts with "*" to distinguish it from a number starting with "0" such as "03" and "090" which is used for an ordinary telephone call and thereby prevent occurrence of an erroneous calling.

The operation data for controlling the devices 29 may be registered in a memory dial function which is provided in an ordinary type of portable telephone terminal.

In the above described embodiment, description has been made about the device controller mounted on a vehicle. Alternatively, the device controller of the invention may be provided in a house to control a television, video tape recorder, air conditioner etc. provided in the house.

As examples of an operation from outside of a house, the device controller of the invention may be used for controlling a remote controlled garage key opener and a front door lock.

## Claims

1. A device controller comprising:
a wave signal receiving section for receiving a wave signal of a predetermined frequency used for communication between a portable telephone terminal and a base station;
an identification section for analyzing an identification code contained in the received wave signal and detecting whether the identification code coincides with a previously registered identification code or not;
an analyzing section for analyzing operation data of the portable telephone terminal contained in the received wave signal; and
a control section for controlling a device to be controlled in accordance with the analyzed data,
said analyzing section or said control section performing a corresponding operation on condition that coincidence of the identification code has been detected by said identification section.

2. A device controller as defined in claim 1 wherein said device to be controlled is provided in a vehicle.

3. A device controller as defined in claim 2 wherein the device provided in a vehicle is at least one of a key-less entry device, an engine starter and an air conditioner.

4. A device controller as defined in claim 1 wherein the device to be controlled is provided in a house.

5. A device controller as defined in claim 4 wherein the device provided in a house is at least one of a remote controlled garage key opener, a remote controlled front door lock, a television, a video tape recorder and an air conditioner.

6. A device controller as defined in any of claims 1 to 5 wherein the operation data starts from the "*" mark or the "#" mark.
